# EUROPEAN PATENT SPECIFICATION

(11) **EP 3 326 839 B1**
(45) Date of publication and mention of the grant of the patent: **17.06.2020**
(21) Application number: 17001813.9
(22) Date of filing: 07.11.2017
(51) Int. Cl.: B60C 11/03

(54) **PNEUMATIC TIRE**
LUFTREIFEN
PNEUMATIQUE

(30) Priority: 28.11.2016 JP 2016230239; 28.11.2016 JP 2016230246
(43) Date of publication of application: 30.05.2018
(60) Divisional application: 20165877.0
(73) Proprietor: Toyo Tire Corporation, Itami-shi, Hyogo 664-0847 (JP)
(72) Inventor: Takahashi, Hisashi, Hyogo 664-0847 (JP)
(74) Representative: Strehl Schübel-Hopf & Partner

(56) References cited:
- JP-A- 2016 002 984
- JP-A- 2016 141 265
- US-A1- 2009 266 457
- US-A1- 2015 375 571

## Description

### CROSS-REFERENCE TO RELATED APPLICATIONS

This application is based upon and claims the benefit of priority from the prior Japanese Patent Applications No. 2016-230239 and 2016-230246, filed on November 28, 2016.

### BACKGROUND

### 1. Field of the Invention

The disclosure of the present invention relates to a pneumatic tire.

### 2. Description of the Related Art

As one of noises which a tire generates, there has been known a striking sound which is generated when a tread portion strikes a road surface at the time of coming into contact with a ground. When a timing at which a ground contact shape of the tire at the time of coming into contact with a road surface and a tread pattern of the tire agree with each other is fixed during a kick-in operation or a kick-out operation of the tire, a peak of the striking sound becomes conspicuous. For example, when a pitch length of a tread pattern in a tire circumferential direction is fixed, a peak of pitch noises becomes high. Further, noises generated by a tire include an air column tube resonance sound generated by an air column formed between a main groove formed on a tread portion and a road surface, and a noise level is increased when a frequency of the pitch noise and a frequency of the air column tube resonance at a specific speed agree with each other.

Conventionally, there has been known a tire where pitch variations are adopted in a tread pattern for reducing pitch noises (see US 2015/0375571A1, JP-A-2014-221573, JP-A-2000-043507). However, in the conventional pitch variable arrangement, the number of kinds of pitch lengths (that is, variable numbers) in a tire circumferential direction are usually set to 3 kinds or 5 kinds. Accordingly, it is not safe to say that such pitch variable arrangement has a sufficient effect of lowering a peak of pitch noises.

The present invention has been made in view of such circumstances, and it is an object of the present invention to provide a pneumatic tire which can lower a peak of pitch noises by dispersing frequencies of the pitch noises thus lowering a noise level.

JP 2016 002984 A discloses a pneumatic tire with the features in the preamble of present claim 1. Another conventional pneumatic tire is described in US 2009/266457 A1.

### SUMMARY

A pneumatic tire according to a first embodiment, which is not an embodiment of the present invention but useful to understand the present invention, has a tire tread portion which includes: a plurality of main grooves extending in a tire circumferential direction; a plurality of transverse grooves extending in a direction which intersects with the main grooves; a plurality of land portion rows formed by arranging a plurality of land portions formed by the main grooves and the transverse grooves in the tire circumferential direction. At least one land portion row is formed such that assuming a tire circumferential length of an element formed of each land portion and the transverse groove disposed adjacently to said each land portion on one side in the tire circumferential direction as a pitch length and the number of pitches which is the number of the elements over the whole circumference of the tire as N, the number of kinds k of pitch lengths in the tire circumferential direction is set to N/4 or more and N or less, and assuming the pitch lengths in a descending order as P₁, P₂, ..., Pₖ and m as an integer of 2 to k, a relationship of Pₘ₋₁/Pₘ<1.050 and a relationship of 1.60≤P₁/Pₖ<2.00 are satisfied.

In the first embodiment, the above-mentioned at least one land portion row may be formed such that a maximum value of a pitch length ratio of the elements disposed adjacently to each other in the tire circumferential direction may be less than 1.71. In the plurality of respective land portion rows formed on the tire tread portion, the number of kinds k of pitch lengths in the tire circumferential direction may be set to N/4 or more and N or less, and a relationship of Pₘ₋₁/Pₘ<1.050 and a relationship of 1.60≤P₁/Pₖ<2.00 may be satisfied.

A pneumatic tire according to a second embodiment, which is an embodiment of the present invention, has a tire tread portion which includes: a plurality of main grooves extending in a tire circumferential direction; a plurality of transverse grooves extending in a direction which intersects with the main grooves; a plurality of land portion rows formed by arranging a plurality of land portions formed by the main grooves and the transverse grooves in the tire circumferential direction. Assuming a tire circumferential length of an element formed of each land portion and the transverse groove disposed adjacently to said each land portion on one side in the tire circumferential direction as a pitch length, the number of pitches which is the number of the elements in each land portion row over the whole circumference of the tire as N, and the number of land portion rows as L, each land portion row includes the elements having plural kinds of pitch lengths, and at least one land portion row has the elements having pitch lengths different from pitch lengths of other land portion rows. Further, the number of kinds j of pitch lengths over the whole tire tread portion are set to N/4 or more and N×L or less, and assuming the pitch lengths over the whole tire tread portion in a descending order as P₁, P₂, ..., Pⱼ and t as an integer of 2 to j, a relationship of Pₜ₋₁/Pₜ<1.050 and a relationship of 1.60≤P₁/Pⱼ<2.00 are satisfied.

In the second embodiment, in each land portion row, a maximum value of a pitch length ratio of the elements disposed adjacently to each other in the tire circumferential direction may be less than 1.71.

### BRIEF DESCRIPTION OF THE DRAWINGS

Fig. 1 is a developed view of a tread pattern of a pneumatic tire according to one embodiment;
Fig. 2 is a partially enlarged view of a tread pattern according to a first embodiment;
Fig. 3 is a graph showing a result of frequency analysis in area variation with respect to the first embodiment;
Fig. 4 is a partially enlarged view of a tread pattern according to a second embodiment;
Fig. 5A to Fig. 5E are partially enlarged views respectively showing a pitch variable arrangement of each land portion row in the tread pattern according to the second embodiment; and
Fig. 6 is a graph showing a result of frequency analysis in area variation with respect to the second embodiment.

### DETAILED DESCRIPTION

In the conventional pitch variable arrangement, to further lower a peak of pitch noises, it is effective to disperse frequencies of pitch noises. For this end, it is effective to increase the variable numbers (that is, the number of kinds of pitch lengths) compared to that of the conventional pitch variable arrangement, and it is also effective to increase a variable ratio (that is, a ratio of a maximum pitch length to a minimum pitch length). In this case, when the variable ratio is excessively large, an n-order component and a 2n-order component of the noise pitch agree with each other thus generating large noises. Accordingly, for lowering a noise level, it is advantageous to set large variable numbers while setting a large variable ratio within a range that an n-order component and a 2n-order component of the noise pitch do not agree with each other.

The present embodiment has been made in view of such finding, and it is an object of the present embodiment to provide a pneumatic tire which can further lower a noise level compared to a pneumatic tire having a conventional pitch variable arrangement. That is, according to the present embodiment, a peak of pitch noises can be lowered by dispersing frequencies of the pitch noises thus lowering a noise level. By lowering the peak of the pitch noises, a noise level when a frequency of the pitch noise and a frequency of an air column tube resonance agree with each other can be also lowered.

Hereinafter, embodiments are described with reference to drawings.

### [First embodiment]

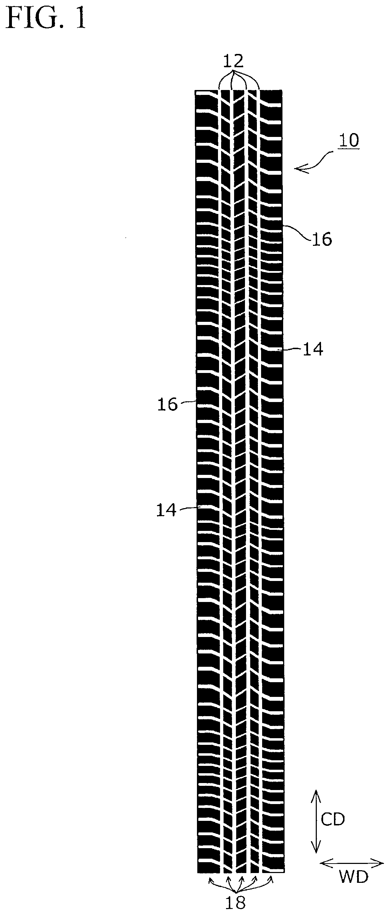

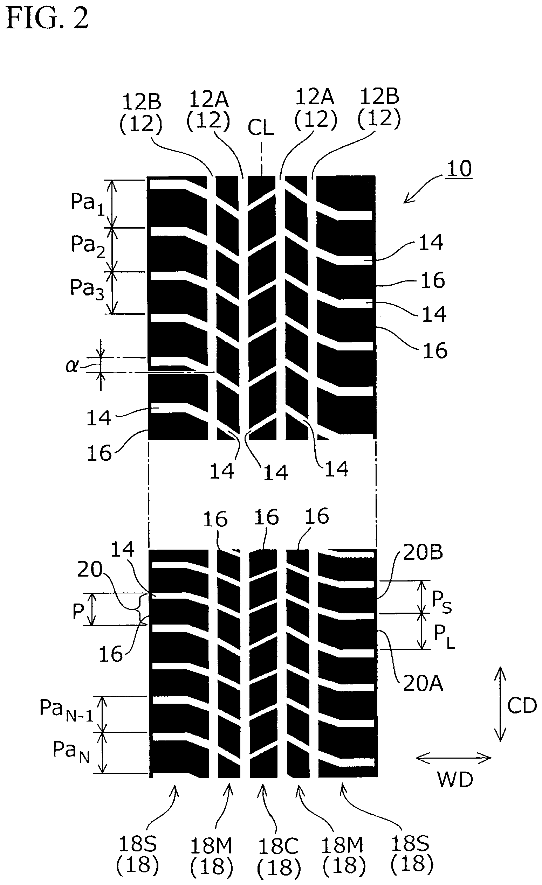

Fig. 1 is a developed view of a tread portion of a pneumatic tire according to one embodiment showing a tread pattern over the whole circumference of the tire, and Fig. 2 is a partially enlarged view of the tread pattern. As shown in Fig. 1 and Fig. 2, on a surface(that is, a surface which is brought into contact with a road surface during traveling) of a tread portion 10 which is made of tread rubber, a plurality of main grooves 12 extending in a tire circumferential direction CD, a plurality of transverse grooves 14 extending in a direction which intersects with the main grooves 12, and a plurality of land portion rows 18 each of which is formed by arranging a plurality of land portions 16 formed by the main grooves 12 and the transverse grooves 14 in the tire circumferential direction CD are formed. With respect to the configurations of the pneumatic tire other than the tread pattern, known tire configurations are applicable and hence, other configurations of the pneumatic tire are not particularly limited.

In this embodiment, four main grooves 12 are formed on the tread portion at intervals in a tire width direction WD. That is, the main grooves 12 are formed of: a pair of left and right center main grooves 12A, 12A which is positioned at a center portion of the tread portion in the tire width direction WD with a tire equator CL sandwiched therebetween; and a pair of left and right shoulder main grooves 12B, 12B which is disposed on both sides of the pair of left and right center main grooves 12A, 12A. Each of the four main grooves 12 is a straight groove extending parallel to the tire circumferential direction CD.

In this embodiment, the transverse grooves 14 are grooves extending in a direction which intersects with the main grooves 12 and crossing the respective land portion rows 18. Accordingly, the land portions 16 are formed as blocks divided by the transverse grooves 14 in the tire circumferential direction CD. The transverse grooves 14 may not be disposed parallel to the tire width direction WD provided that the transverse grooves 14 are grooves extending in the tire width direction WD. That is, the transverse grooves 14 may be grooves extending in the tire width direction WD while being inclined with respect to the tire width direction WD.

On the tread portion 10, five land portion rows 18 are defined by the main grooves 12 in the tire width direction WD. That is, the land portion rows 18 are formed of: a center land portion row 18C which is sandwiched between the pair of center main grooves 12A, 12A; a pair of left and right shoulder land portion rows 18S, 18S which is positioned outside the pair of shoulder main grooves 12B, 12B in the tire width direction WD respectively; and a pair of left and right mediate land portion rows 18M, 18M each of which is sandwiched between the center main groove 12A and the shoulder main groove 12B. The large number of transverse grooves 14 are formed at intervals in the tire circumferential direction CD. Accordingly, each of the land portion rows 18 is formed as a block row where the land portions 16 which are the plurality of blocks are arranged in a row in the tire circumferential direction CD.

In this embodiment, in the above-mentioned five land portion rows 18, by imparting a plurality of different pitch lengths P to repetitive elements 20 each of which is formed of the land portion 16 and the transverse groove 14, land portion rows each having a pitch variable arrangement are formed.

To be more specific, in each land portion row 18, assuming the number of pitches over the whole circumference of the tire as N, the number of kinds k of pitch lengths P (that is, variable number) in the tire circumferential direction CD is set to N/4 or more and N or less (N/4≤k≤N). The number of kinds k of the pitch lengths P is set to N/4 or more and hence, frequencies of pitch noises are dispersed so that an effect of lowering a noise level can be enhanced. From a viewpoint of such a noise level lowering effect, it is preferable that the number of kinds k of the pitch lengths P be as many as possible. Accordingly, it is preferable that the number of kinds k be N/2 or more, and it is more preferable that the pitch length P be changed with respect to all elements 20, that is, k=N.

As shown in Fig. 2, the pitch length P is a tire circumferential length of the element 20 formed of each land portion 16 and the transverse groove 14 disposed adjacently to the land portion 16 on one side in the tire circumferential direction CD. The element 20 is a repetitive unit (1 pitch) used for forming the land portion row 18. Accordingly, each land portion row 18 is formed by arranging the elements 20 having plural kinds of pitch lengths P in the tire circumferential direction CD.

The number of pitches N over the whole circumference of the tire is the number of the above-mentioned elements 20 over the whole circumference of the tire, and is the number of elements arranged over the whole circumference in the tire circumferential direction CD in each land portion row 18. The number of pitches N is not particularly limited, for example, the number of pitches N may be 30 to 100, or may be 40 to 80. In the example shown in Fig. 1 and Fig. 2, the five land portion rows 18 have the same number of pitches N, that is, the number of pitches N are respectively set to 56 (N=56).

In the example shown in Fig. 1 and Fig. 2, the pitch length P is changed with respect to all elements 20 in the tire circumferential direction CD, that is, the number of kinds k of the pitch lengths P are set equal to the number of pitches N (k=N). To explain this by taking the left shoulder land portion row 18S shown in Fig. 2 as an example, all pitch lengths Pa₁, Pa₂, Pa₃, ..., Pa_{N-1}, and PaN of the respective elements 20 in the tire circumferential direction CD are set different from each other.

In this embodiment, in each of five land portion rows 18, assuming the number of kinds of the pitch lengths P as k and the pitch lengths P in a descending order as P₁, P₂, ..., Pₖ, a relationship of Pₘ₋₁/Pₘ<1.050 and a relationship of 1.60≤P₁/Pₖ<2.00 are established (in this relationship, m being an integer of 2 to k).

In this manner, by setting a variable ratio P₁/Pₖ which is a ratio of a maximum pitch length P₁ to a minimum pitch length Pₖ to less than 2.00, it is possible to suppress the occurrence of a phenomenon that an n-order component and a 2n-order component of the noise pitch agree with each other thus generating large noises. Further, by setting the variable ratio P₁/Pₖ to 1.60 or more, the dispersion of frequencies of pitch noises can be accelerated. The variable ratio P₁/Pₖ is preferably set to 1.80 or more, is more preferably set to 1.90 or more and 1.98 or less.

By setting a maximum value of the pitch length ratio Pₘ₋₁/Pₘ to less than 1.050, an effect of dispersing frequencies of the pitch noises can be enhanced in cooperation with the setting of the variable number and the setting of the variable ratio described above. That is, the setting the maximum value of the pitch length ratio Pₘ₋₁/Pₘ to a small value under a condition that a large variable number is set and a high variable ratio is set as described above leads to the elimination of excessive irregularities in an increment of a pitch length from a minimum pitch length Pₖ to a maximum pitch length P₁. Accordingly, by dispersing the frequencies of the pitch noises widely and uniformly, an effect of lowering a peak of pitch noise can be enhanced. The pitch length ratio Pₘ₋₁/Pₘ is preferably set to 1.040 or less (that is, Pₘ₋₁/Pₘ≤1.040), and the pitch length ratio Pₘ₋₁/Pₘ is preferably set to 1.010 or more (that is, Pₘ₋₁/Pₘ≥1.010).

In this embodiment, an upper limit (that is, a maximum value) of a pitch length ratio of the elements 20 disposed adjacently to each other in the tire circumferential direction CD is preferably set to less than 1.71. That is, out of two elements 20 disposed adjacently to each other in the tire circumferential direction CD, assuming a pitch length of the element 20A having a larger pitch length as P_{L} and a pitch length of the element 20B having a smaller pitch length as P_{S}, it is preferable that an upper limit of a pitch length ratio expressed by P_{L}/P_{S} be less than 1.71 (P_{L}/P_{S}<1.71). By defining an upper limit of the pitch length ratio P_{L}/P_{S} of the elements 20 disposed adjacently to each other in the tire circumferential direction CD as described above, it is possible to suppress non-uniform wear caused by a rapid change in rigidity of the land portion 16. From a viewpoint of non-uniform wear resistance, a maximum value of the pitch length ratio P_{I}/P_{S} is further preferably set to less than 1.34 (that is, P_{L}/P_{S}<1.34).

The arrangement (that is, an arranging method) of the elements 20 having plural kinds k of pitch lengths P is not particularly limited. For example, when the number of kinds k is equal to the number of pitches N (k=N), the elements 20 may be arranged such that the pitch lengths P are gradually increased in the tire circumferential direction CD. Alternatively, the elements 20 may be arranged such that the elements 20 having plural kinds k of pitch lengths P are divided into three groups, that is, a large pitch length group, a middle pitch length group and a small pitch length group in a descending order from the elements 20 having the larger pitch length P, and the elements are arranged in the tire circumferential direction CD by selecting the elements from the respective groups such that the elements belonging to the large pitch length group and the elements belonging to the small pitch length group are not disposed adjacently to each other. With such a configuration, the elements 20 can be arranged in the tire circumferential direction CD while suppressing the pitch length ratio P_{L}/P_{S} of the elements 20 disposed adjacently to each other to a small value.

As one example, in the example shown in Fig. 1 (k=N), from the large pitch length group, the middle pitch length group and the small pitch length group, a plurality of elements are allocated in the tire circumferential direction CD in the order of the elements having a large pitch length, the elements having a middle pitch length, the elements having a small pitch length, the elements having a middle pitch length, the elements having a large pitch length, the elements having a middle pitch length, the elements having a small pitch length, the elements having a middle pitch length, the elements having a large pitch length, the elements having a middle pitch length, the elements having a small pitch length, and the elements having a middle pitch length thus arranging the elements such that the pitch lengths of the elements are smoothly changed in the tire circumferential direction CD. That is, in an arrangement of the elements over the whole circumference of the tire, the elements are arranged such that a group of a plurality of elements belonging to the large pitch length group is disposed at three positions over the circumference, and a group of a plurality of elements belonging to the small pitch length group is disposed between the groups of plurality of elements belonging to the large pitch length group while interposing a group of a plurality of elements belonging to the middle pitch length group between the group of the plurality of elements belonging to the large pitch length group and the group of the plurality of elements belonging to the small pitch length group.

According to this embodiment, as described above, the large variable number is set while setting the large variable ratio within a range that an n-order component and a 2n-order component of the noise pitch do not agree with each other and hence, frequencies of pitch noises are dispersed so that a peak of pitch noises can be lowered. Further, by lowering the peak of the pitch noises, even when a frequency of the pitch noise and a frequency of an air column tube resonance agree with each other, the increase of a noise level can be suppressed. Accordingly, a noise level can be more effectively lowered than ever before.

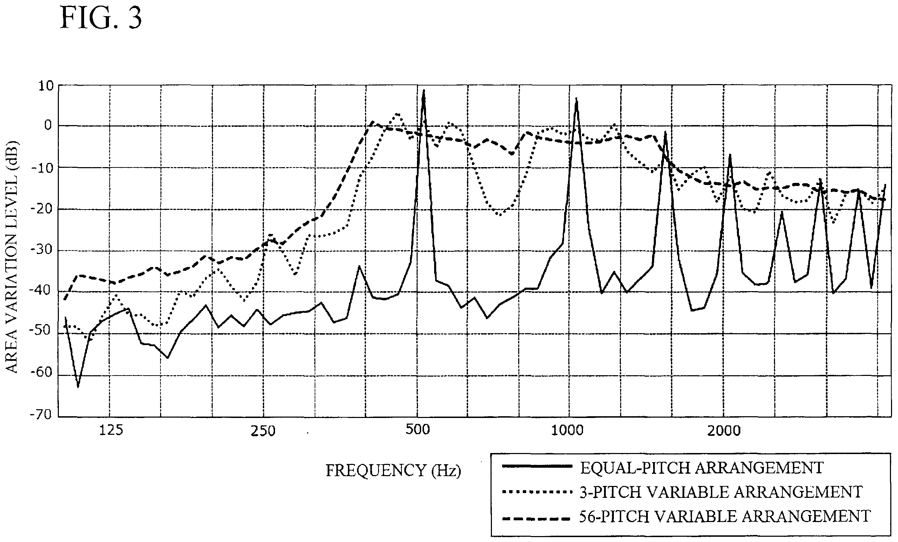

Fig. 3 is a graph showing a result of frequency analysis in area variation with respect to a 56-pitch variable arrangement which is adopted as one example of pitch variable arrangement in the first embodiment, and an equal-pitch variable arrangement and a 3-pitch variable arrangement which are adopted as comparison examples. The analysis is performed in accordance with a method described in JP-A-2003-136926, the entire contents of which are incorporated herein by reference. In the method, variable data on ground contact area is acquired by scanning a ground contact pattern of a tire with a road surface in the circumferential direction of the tread pattern, and data on an area variation level with respect to frequency is acquired by performing frequency analysis based on such variation data. The tire size is set to 265/65R17, and a traveling speed is set to 80km/h. The tire pattern is set such that, in the 56-pitch variable arrangement, pitch lengths are changed at an increment of 0.52mm within a range of from 29.10mm to 57.68mm In the 3-pitch variable arrangement, pitch lengths are set to 3 kinds of pitch lengths, that is, 36.77mm, 43.77mm, and 50.33mm. In the equal-pitch arrangement, all pitch lengths are fixed to 43.39mm.

As shown in Fig. 3, by adopting the 56-pitch variable arrangement, compared to the equal-pitch arrangement and the 3-pitch variable arrangement, frequencies of pitch noises can be dispersed and hence, a maximum level of the pitch noises can be lowered. In the equal-pitch arrangement, a peak of a primary component in the vicinity of 500Hz and a peak of a secondary component in the vicinity of 1kHz are completely separated from each other. On the other hand, in the 56-pitch variable arrangement, due to the dispersion of the respective peaks, a maximum level of the pitch noises is lowered and, further, superposition of a dispersed primary component and a dispersed secondary component is suppressed and hence, the increase of a noise level caused by the combination of both the primary component and the secondary component can be suppressed. In this manner, according to this embodiment, the large variable number is set while setting the large variable ratio within a range that the n-order component and the 2n-order component of the noise pitch do not agree with each other and hence, a noise level can be remarkably lowered.

In the above-mentioned embodiment, the pitch variable arrangement is adopted where in all of the plurality of land portion rows 18 formed on the tread portion 10, the number of kinds k of pitch lengths P in the tire circumferential direction CD is set to N/4 or more and N or less, and a relationship of Pₘ₋₁/Pₘ<1.050 and a relationship of 1.60≤P₁/Pₖ<2.00 are satisfied. However, such a pitch variable arrangement may be adopted in at least one land portion row 18 formed on the tread portion 10. For example, the above-mentioned pitch variable arrangement may be adopted only in the shoulder land portion row where problems are liable to occur in noise pitches, and conventional 3-kinds or 5-kinds pitch variable arrangement or the equal-pitch arrangement may be adopted in other land portion rows.

In the above-mentioned embodiment, all of the plurality of land portion rows 18 formed on the tread portion 10 adopt the same pitch variable arrangement. That is, in all land portion rows 18, the orders of arrangements (arrangement patterns) of the respective elements 20 having the plural kinds k of pitch lengths P in the tire circumferential direction CD are set to the same order of arrangement. However, order of arrangement may differ depending on the land portion row 18. That is, in at least one land portion row out of the plurality of land portion rows 18, the arrangement of the elements 20 having the plural kinds k of pitch lengths P may differ from the arrangement of the elements of other land portion rows. For example, by setting the different arrangement order of the elements in the circumferential direction for the respective land portion rows 18 while adopting the same kind of the pitch lengths P in all land portion rows 18, the pitch variable arrangements of the respective land portion rows 18 may differ from each other. In this manner, by adopting the different pitch variable arrangement depending on the land portion row 18, the respective land portion rows 18 are brought into contact with a ground at different timings and hence, the frequencies of the pitch noises can be dispersed at random thus effectively lowering a noise level.

As shown in Fig. 2, in the above-mentioned embodiment, the plurality of land portion rows 18 are respectively displaced from each other in phase of the elements 20 in the tire circumferential direction CD. As one example, in Fig. 2, the phase difference α between the left shoulder land portion row 18S and the mediate land portion row 18M disposed adjacently to the left shoulder land portion row 18S is shown. By displacing the land portion rows 18 in phase of the elements 20 in the tire circumferential direction from each other as described above, the land portions 16 of the respective land portion rows 18 are brought into contact with a ground at different timings and hence, frequencies of pitch noises can be further dispersed thus lowering a noise level. It is unnecessary that all of the plurality of land portion rows 18 are displaced from each other in phase. At least one land portion row 18 out of the plurality of land portion rows 18 may differ from other land portion rows 18 in phase of the elements 20 in the tire circumferential direction CD.

In the above-mentioned embodiment, the number of pitches N is set equal in all of the plurality of land portion rows 18. However, the number of pitches may differ depending on the land portion row 18. That is, at least one land portion row 18 out of the plurality of land portion rows 18 may differ from other land portion rows 18 in the number of pitches. With such a configuration, frequencies of noises determined based on the number of pitches can be dispersed.

### [Second embodiment]

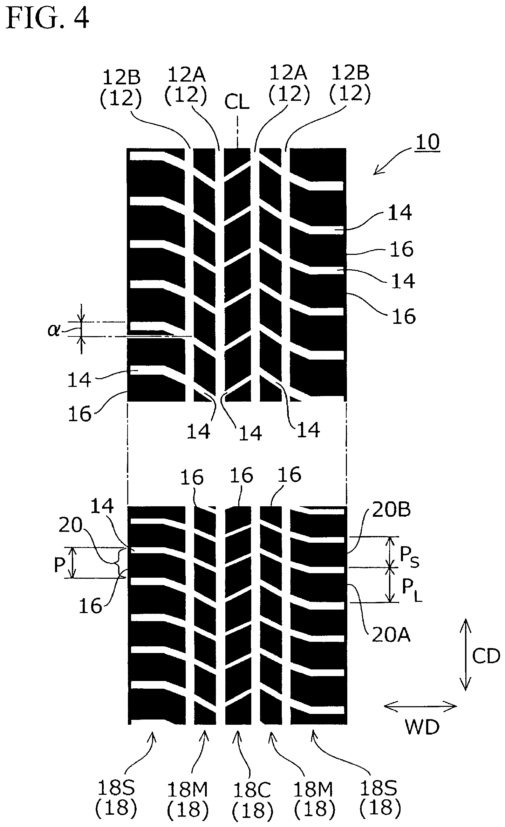

Although a pneumatic tire according to a second embodiment basically has the same tread pattern as the pneumatic tire according to the above-mentioned first embodiment (see Fig. 1), the pneumatic tire according to the second embodiment differs from the pneumatic tire according to the first embodiment with respect to the number of kinds of pitch lengths and a method of setting the number of kinds of pitch lengths. Hereinafter, the detailed description is made by focusing on a point which makes the second embodiment different from the first embodiment while assuming that factors which arc not particularly described have substantially the same configurations as the first embodiment. As shown in Fig. 1 and Fig. 4, in the second embodiment, each land portion row 18 is formed by arranging repetitive elements 20 each of which is formed of a land portion 16 and a transverse groove 14 in the tire circumferential direction CD, and the number of pitches N over the whole circumference of a tire is set equal in all land portion rows 18. Accordingly, assuming the number of land portion rows 18 as L, a tire includes N×L pieces of the elements 20 as a whole.

The number of pitches N over the whole circumference of the tire in each land portion row 18 is set in substantially the same manner as the first embodiment and may be set to 30 to 100 or 40 to 80, for example. In this embodiment, the number of pitches N is set to 56 (N=56). The number of land portion rows L is preferably set to an integer of 2 to 6, and is more preferably set to an integer of 3 to 5. In this embodiment, the number of land portion rows L is set to 5 (L=5). In substantially the same manner as the first embodiment, a tire circumferential length of the above-mentioned element 20 is assumed as a pitch length P.

In the second embodiment, by imparting a plurality of different pitch lengths P to the elements 20 in five land portion rows 18, land portion rows each having a pitch variable arrangement are formed. To be more specific, each land portion row 18 includes the elements 20 having the plural kinds of pitch lengths P and is formed by arranging such elements 20 in the tire circumferential direction CD. Further, not only within each land portion row 18 but also between the land portion rows 18, the above-mentioned elements 20 have the different pitch lengths P. That is, at least one land portion row 18 includes the elements 20 which differ in pitch length P from the elements 20 of other land portion rows 18.

In the second embodiment, the number of kinds j of pitch lengths P (that is, variable number) in the whole tread portion 10 are set to N/4 or more and N×L or less (N/4≤j≤N×L). The number of kinds j of the pitch lengths P is set to N/4 or more and hence, frequencies of pitch noises are dispersed so that an effect of lowering a noise level can be enhanced. From a viewpoint of such a noise level lowering effect, it is preferable that the number of kinds j of the pitch lengths P be as many as possible. Accordingly, it is preferable that the number of kinds j be N×L/4 or more, it is more preferable that the number of kinds j be N×L/2 or more, and it is further more preferable that the pitch length P be changed with respect to all elements 20, that is, j=N×L.

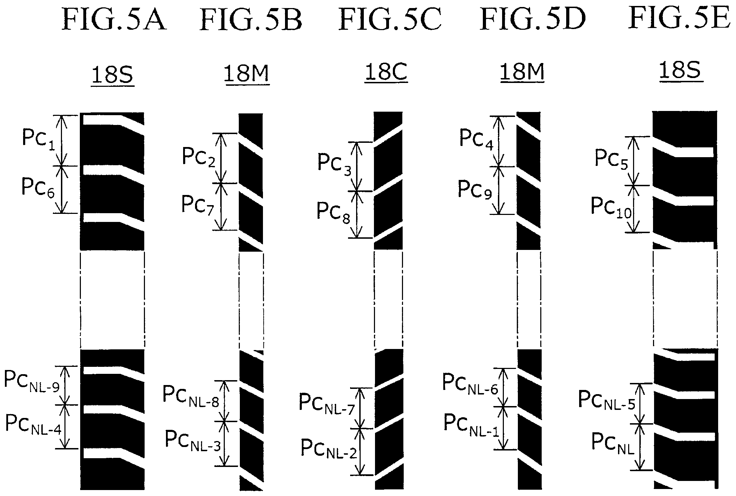

In the example shown in Fig. 4, the pitch length P is changed with respect to all elements 20 in the tread portion 10, that is, the number of kinds j of the pitch lengths P are set equal to the number of pitches N×L (j=N×L). Fig. 5A to Fig. 5E are views showing the respective land portion rows 18 shown in Fig. 4 in an exploded manner, wherein all pitch lengths Pc₁, Pc₂, Pc₃, Pc₄, Pc₅, Pc₆, Pc₇, Pc₈, Pc₉, Pc₁₀, ..., Pc_{NL-9}, Pc_{NL-8}, Pc_{NL-7}, Pc_{NL-6}, Pc_{NL-5}, Pc_{NL-4}, Pc_{NL-3}, Pc_{NL-2}, Pc_{NL-1}, and Pc_{NL} of N×L pieces of elements 20 existing on the tread portion 10 are set to different pitch lengths.

In the second embodiment, in the whole tread portion 10, assuming the number of kinds of pitch lengths P as j and the pitch lengths P in a descending order as P₁, P₂, ..., Pⱼ, a relationship of Pₜ₋₁/Pₜ<1.050 and a relationship of 1.60≤P₁/Pⱼ<2.00 are established (in this relationship, t being an integer of 2 to j).

In this manner, by setting a variable ratio P₁/Pⱼ which is a ratio of a maximum pitch length P₁ to a minimum pitch length Pⱼ to less than 2.00, it is possible to suppress the occurrence of a phenomenon that an n-order component and a 2n-order component of the noise pitch agree with each other thus generating large noises. Further, by setting the variable ratio P₁/Pⱼ to 1.60 or more, the dispersion of frequencies of pitch noises can be accelerated. The variable ratio P₁/Pⱼ is preferably set to 1.80 or more, is more preferably set to 1.90 or more, and is further more preferably set to 1.95 or more.

By setting a maximum value of the pitch length ratio Pₜ₋₁/Pₜ to less than 1.050, in the same manner as the first embodiment, an effect of dispersing frequencies of the pitch noises can be enhanced in cooperation with the setting of the variable number and the setting of the variable ratio described above. The pitch length ratio Pₜ₋₁/Pₜ is preferably set to 1.020 or less (that is, Pₜ₋₁/Pₜ≤1.020), and is preferably set to 1.002 or more (that is, Pₜ₋₁/Pₜ≥1.002).

In the second embodiment, an upper limit (that is, a maximum value) of a pitch length ratio of the elements 20 disposed adjacently to each other in the tire circumferential direction CD is preferably set to less than 1.71. That is, out of two elements 20 disposed adjacently to each other in the tire circumferential direction CD, assuming a pitch length of the element 20A having a larger pitch length as P_{L} and a pitch length of the element 20B having a smaller pitch length as P_{S}, it is preferable that an upper limit of a pitch length ratio expressed by P_{L}/P_{S} be less than 1.71 (P_{L}/P_{S}<1.71). By defining an upper limit of the pitch length ratio P_{L}/P_{S} of the elements 20 disposed adjacently to each other in the tire circumferential direction CD as described above, it is possible to suppress non-uniform wear caused by a rapid change in rigidity of the land portion 16. From a viewpoint of non-uniform wear resistance performance, a maximum value of the pitch length ratio P_{L}/P_{S} is further preferably set to less than 1.34 (that is, P_{L}/P_{S}<1.34).

The arrangement (that is, an arranging method) of the elements 20 having plural kinds j of pitch lengths P is not particularly limited. For example, the elements 20 may be arranged such that the pitch lengths are gradually increased in the tire circumferential direction in each land portion row. Alternatively, the elements 20 may be arranged such that the elements 20 having plural kinds j of pitch lengths P are divided into three groups, that is, a large pitch length group, a middle pitch length group and a small pitch length group in a descending order from the elements 20 having the larger pitch length P, and the elements are arranged by selecting the elements from the respective groups such that the elements belonging to the large pitch length group and the elements belonging to the small pitch length group are not disposed adjacently to each other in the tire circumferential direction. With such a configuration, the elements 20 can be arranged in the tire circumferential direction CD while suppressing the pitch length ratio P_{L}/P_{S} of the elements 20 disposed adjacently to each other in the tire circumferential direction to a small value. The allocation of the elements 20 having the plural kinds j of pitch lengths P to the respective land portion rows 18 may be performed such that a total length of the pitch lengths over the whole circumference of a tire is set equal in all land portion rows 18.

As one example, from the large pitch length group, the middle pitch length group and the small pitch length group, a plurality of elements are allocated in the respective land portion rows 18 in the tire circumferential direction CD in the order of the elements having a large pitch length, the elements having a middle pitch length, the elements having a small pitch length, the elements having a middle pitch length, the elements having a large pitch length, the elements having a middle pitch length, the elements having a small pitch length, the elements having a middle pitch length, the elements having a large pitch length, the elements having a middle pitch length, the elements having a small pitch length, and the elements having a middle pitch length thus arranging the elements such that the pitch lengths of the elements are smoothly changed in the tire circumferential direction CD, and are smoothly changed also in the tire width direction WD (see Fig. 1). That is, in each land portion row 18, in an arrangement of the elements over the whole circumference of the tire, the elements may be arranged such that a group of a plurality of elements belonging to the large pitch length group is disposed at three positions over the circumference, and a group of a plurality of elements belonging to the small pitch length group is disposed between the groups of the plurality of elements belonging to the large pitch length group while interposing a group of a plurality of elements belonging to the middle pitch length group between the group of the plurality of elements belonging to the large pitch length group and the group of the plurality of elements belonging to the small pitch length group. Further, the elements disposed adjacently to each other in the tire width direction WD may be arranged by selecting from the same group.

According to the second embodiment, as described above, the large variable number is set while setting the large variable ratio within a range that an n-order component and a 2n-order component of the noise pitch do not agree with each other and hence, frequencies of pitch noises are dispersed so that a peak of pitch noises can be lowered. Further, by lowering the peak of the pitch noises, even when a frequency of the pitch noise and a frequency of an air column tube resonance agree with each other, the increase of a noise level can be suppressed. Accordingly, a noise level can be more effectively lowered than ever before.

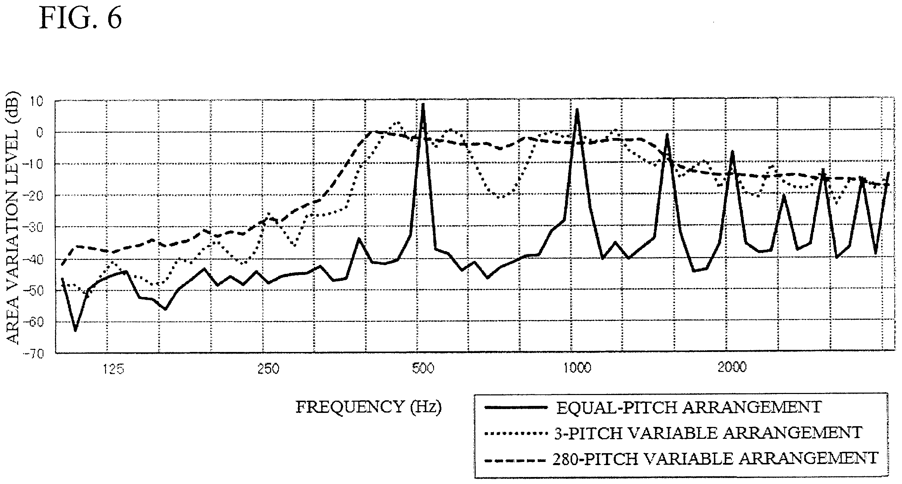

Fig. 6 is a graph showing a result of frequency analysis in area variation with respect to a 280-pitch variable arrangement (j=N×L) which is adopted as one example of pitch variable arrangement in the second embodiment, and an equal-pitch arrangement and a 3-pitch variable arrangement which are adopted as comparison examples. The analysis is performed by substantially the same method as the above-mentioned first embodiment. The tire size and a traveling speed are equal to those of the first embodiment. The tire pattern is set such that, in the 280-pitch variable arrangement, pitch lengths are changed at an increment of 0.10mm within a range of from 29.07mm to 57.71mm. Setting of the pitch lengths in the 3-pitch variable arrangement and setting of pitch lengths in the equal-pitch arrangement are equal to those of the first embodiment respectively.

As shown in Fig. 6, by adopting the 280-pitch variable arrangement, compared to the equal-pitch arrangement and the 3-pitch variable arrangement, frequencies of pitch noises can be dispersed and hence, a maximum level of the pitch noises can be lowered. In the equal-pitch arrangement, a peak of a primary component in the vicinity of 500Hz and a peak of a secondary component in the vicinity of 1kHz are completely separated from each other. On the other hand, in the 280-pitch variable arrangement, due to the dispersion of the respective peaks, a maximum level of the noise pitches is lowered and, further, superposition of a dispersed primary component and a dispersed secondary component is suppressed and hence, the increase of a noise level caused by the combination of both the primary component and the secondary component can be suppressed. In this manner, according to the second embodiment, the large variable number is set while setting the large variable ratio within a range that the n-order component and the 2n-order component of the noise pitch do not agree with each other and hence, a noise level can be remarkably lowered.

In the second embodiment, as shown in Fig. 4, the plurality of land portion rows 18 are respectively displaced from each other in phase of the elements 20 in the tire circumferential direction CD. As one example, in Fig. 4, the phase difference α between the left shoulder land portion row 18S and the mediate land portion row 18M disposed adjacently to the left shoulder land portion row 18S is shown. By displacing the land portion rows 18 in phase of the elements 20 in the tire circumferential direction from each other as described above, the land portions 16 of the respective land portion rows 18 are brought into contact with a ground at different timings and hence, frequencies of pitch noises can be further dispersed thus lowering a noise level. It is unnecessary that all of the plurality of land portion rows 18 are displaced from each other in phase. At least one land portion row 18 out of the plurality of land portion rows 18 may differ from other land portion rows 18 in phase of the elements 20 in the tire circumferential direction CD.

### [Another embodiment]

In the above-mentioned first and second embodiments, the transverse grooves 14 are formed across the respective land portion rows 18. However, the transverse groove 14 is not limited to a groove formed across the land portion rows 18, and a groove which does not completely cross the land portion row 18 and terminates at an intermediate portion of the land portion row 18 may be adopted provided that the groove causes a pitch noise. Accordingly, the land portions 16 may not be blocks completely divided by the transverse grooves 14 and may be connected to each other at portions thereof in the tire width direction.

### [Examples]

### [First example]

Pneumatic tires having a tire size of 265/65R17 and a tread pattern shown in Fig. 1 and Fig. 2 are manufactured (the number of pitches N over the whole circumference of a tire is 56 (N=56)). In the examples 1 to 5, the number of kinds k of pitch lengths P (variable number), a variable ratio P₁/Pₖ, a maximum value of Pₘ₋₁/Pₘ, and a maximum value of P_{L}/P_{S} in the respective land portions rows are shown in Table 1, and these pneumatic tires basically have the same tread pattern.

To be more specific, the example 1 is a variable arrangement having 56 kinds of pitch lengths P where the pitch lengths are changed at an increment of 0.52mm within a range of from a minimum pitch length of 29.10mm to a maximum pitch length of 57.68mm (where the increment of the pitch lengths is fixed, and k=N=56), that is, the example 1 is an example where pitch lengths of all elements in the tire circumferential direction are changed (the arrangement is shown in Fig. 1). The examples 2 to 4 are examples where, compared to the example 1, a minimum pitch length and a maximum pitch length are changed (an average value of both the minimum pitch length and the maximum pitch length being equal to that of the embodiment 1), and the number of kinds k of the pitch lengths are changed as shown in Table 1. Setting of the respective pitch lengths is made such that, in the same manner as the example 1, pitch lengths are changed at a fixed increment within a range of from a minimum pitch length to a maximum pitch length. The example 5 is an example where the arrangement order of the elements is changed compared to the example 1.

To be more specific, in the examples 1 to 4, a plurality of elements are selected from the previously-mentioned large pitch length group, the middle pitch length group and the small pitch length group, and the selected elements are allocated in the order of the elements having a large pitch length, the elements having a middle pitch length, the elements having a small pitch length, the elements having a middle pitch length, the elements having a large pitch length, the elements having a middle pitch length, the elements having a small pitch length, the elements having a middle pitch length, the elements having a large pitch length, the elements having a middle pitch length, the elements having a small pitch length, and the elements having a middle pitch length thus arranging the elements such that the pitch lengths of the elements are smoothly changed in the tire circumferential direction CD. In the example 5, a plurality of elements are selected from the above-mentioned large pitch length group, the middle pitch length group and the small pitch length group, and the selected elements are allocated in the order of the elements having a large pitch length, the elements having a middle pitch length, the elements having a small pitch length, the elements having a large pitch length, the elements having a middle pitch length, the elements having a small pitch length, the elements having a large pitch length, the elements having a middle pitch length, and the elements having a small pitch length thus arranging the elements such that the pitch lengths of the elements are steeply changed in the tire circumferential direction CD.

Also the comparison examples 1 to 3 basically have the same tread pattern as the examples. In the comparison example 1, an equal-pitch arrangement where a pitch length is set to 43.39mm is adopted. In the comparison example 2, a 3-pitch variable arrangement where pitch lengths are respectively set to 32.84mm, 43.78mm, and 54.73mm is adopted. In the comparison example 3, a 5-pitch variable arrangement where pitch lengths are respectively set to 32.84mm, 38.31mm, 43.78mm, 49.26mm, and 54.73mm is adopted.

The respective manufactured tires are assembled to rims having a size of 17×8.0J at an air pressure of 193kPa and the tires are mounted on a test vehicle, and noise performance and non-uniform wear resistance performance of the respective tires are evaluated. The evaluation method is described as follows.
- Noise performance: An overall value (OAL) when the test vehicle travels on a noise measuring course at a vehicle speed of 80km/h is measured, and the evaluation is indicated by an index with the result of the comparison example 1 set as the reference (100). Table 1 shows that the larger the numerical value, the smaller a noise becomes thus acquiring favorable noise performance.
- Non-uniform wear resistance performance: A toe-and-heal wear amount of the tire after a vehicle actually travels a prescribed distance is measured, and the evaluation is indicated by an index with the result of the comparison example 1 set as the reference (100). Table 1 shows that the larger the numerical value, the smaller a toe-and-heal wear amount becomes thus acquiring favorable non-uniform wear resistance performance.

**[Table 1]**

| | Comparison Example 1 | Comparison Example 2 | Comparison Example 3 | Example 1 | Example 2 | Example 3 | Example 4 | Example 5 |
|---|---|---|---|---|---|---|---|---|
| The Number of Kinds k of Pitch Lengths | 1 | 3 | 5 | 56 | 14 | 28 | 56 | 56 |
| P₁/Pₖ | 1 | 1.67 | 1.67 | 1.98 | 1.60 | 1.96 | 1.67 | 1.98 |
| Maximum Value of Pₘ₋₁/Pₘ | 1.000 | 1.333 | 1.167 | 1.018 | 1.046 | 1.035 | 1.016 | 1.018 |
| Maximum Value of P_{L}/P_{S} | 1.00 | 1.33 | 1.17 | 1.32 | 1.24 | 1.32 | 1.26 | 1.70 |
| Noise Performance | 100 | 104 | 105 | 110 | 107 | 109 | 108 | 110 |
| Non-uniform Wear Resistance Performance | 100 | 97 | 98 | 100 | 100 | 99 | 100 | 95 |

The result of the evaluation is shown in Table 1 where, in the examples 1 to 5, the noise performance is improved compared to not only the comparison example 1 where the equal-pitch arrangement is adopted but also the comparison example 2 where the 3-pitch variable arrangement is adopted and the comparison example 3 where the 5-pitch variable arrangement is adopted. Further, in the examples 1 to 4 where the maximum value of P_{L}/P_{S} is set to a small value, the non-uniform wear resistance performance is also improved compared to the example 5.

### [Second example]

Pneumatic tires having a tire size of 265/65R17 and a tread pattern shown in Fig. 1 and Fig. 4 are manufactured (the number of pitches N over the whole circumference of a tire is 56 (N=56), and the number of land portion rows L is 5 (L=5)). In the examples 11 to 16, the number of kinds j of pitch lengths P (variable number) in the whole tread portion, a variable ratio P₁/Pⱼ, a maximum value of Pₜ₋₁/Pₜ, and a maximum value of P_{L}/P_{S} are shown in Table 2, and these pneumatic tires basically have the same tread pattern.

To be more specific, the example 11 is a variable arrangement having 280 kinds of pitch lengths P where the pitch lengths are changed at an increment of 0.10mm within a range of from a minimum pitch length of 29.07mm to a maximum pitch length of 57.71mm (where the increment of the pitch lengths is fixed, and j=N×L=280), that is, the example 11 is an example where pitch lengths of all elements on the tread portion are changed (an arrangement being shown in Fig. 1). The elements are arranged such that a plurality of elements are selected from the above-mentioned large pitch length group, the middle pitch length group and the small pitch length group, and the selected elements are allocated in the tire circumferential direction CD in each land portion row 18 in the order of the elements having a large pitch length, the elements having a middle pitch length, the elements having a small pitch length, the elements having a middle pitch length, the elements having a large pitch length, the elements having a middle pitch length, the elements having a small pitch length, the elements having a middle pitch length, the elements having a large pitch length, the elements having a middle pitch length, the elements having a small pitch length, and the elements having a middle pitch length thus arranging the elements such that the pitch lengths of the elements are smoothly changed in the tire circumferential direction CD as well as in the tire width direction WD. That is, in each land portion row 18, in an arrangement of the elements over the whole circumference of the tire, the elements are arranged such that a group of a plurality of elements belonging to the large pitch length group is disposed at three positions over the circumference, and a group of a plurality of elements belonging to the small pitch length group is disposed between the groups of the plurality of elements belonging to the large pitch length group while interposing a group of a plurality of elements belonging to the middle pitch length group between the group of the plurality of elements belonging to the large pitch length group and the group of the plurality of elements belonging to the small pitch length group. Further, the elements disposed adjacently to each other in the tire width direction WD are arranged by selecting from the same group.

In the example 12, pitch lengths are changed at a fixed increment within a range of from a minimum pitch length of 33.38mm to a maximum pitch length 53.40mm (where the number of kinds of pitch lengths is 14 (j=14)), and a variable number in the tire circumferential direction is set to 3 in all respective land portion rows. In the shoulder land portion rows on both sides, the same pitch length is used only with respect to one kind, and different pitch lengths are set with respect to other kinds.

The example 13 is an example where pitch lengths are changed at a fixed increment within a range of from a minimum pitch length of 29.07mm to a maximum pitch length of 57.71mm (where the number of kinds of pitch lengths is 70 (j=N×L/4=70)), and a variable number in the tire circumferential direction is set to 14 in all respective land portion rows. The respective land portion rows do not use the same kind of pitch length.

The example 14 is an example where pitch lengths are changed at a fixed increment within a range of from a minimum pitch length of 29.07mm to a maximum pitch length of 57.71mm (where the number of kinds of pitch lengths is 140 (j=N×L/2=140)), and a variable number in the tire circumferential direction is set to 28 in all respective land portion rows. The respective land portion rows do not use the same kind of pitch length.

The example 15 is an example where a minimum pitch length is set to 32.84mm, and a maximum pitch length is set to 54.73mm. Other factors are set substantially in the same manner as the example 11. The example 16 is an example where the arrangement order of the elements is changed compared to the example 11. In the example 16, a plurality of elements are selected from the above-mentioned large pitch length group, middle pitch length group and small pitch length group, and the selected elements are allocated in the tire circumferential direction CD in the order of the elements having a large pitch length, the elements having a middle pitch length, the elements having a small pitch length, the elements having a large pitch length, the elements having a middle pitch length, the elements having a small pitch length, the elements having a large pitch length, the elements having a middle pitch length, and the elements having a small pitch length thus arranging the elements such that the pitch lengths are steeply changed in the tire circumferential direction CD.

Comparison examples 1 to 3 are equal to the comparison example 1 to 3 of the first example.

The respective manufactured tires are assembled to rims having a size of 17×8.0J at an air pressure of 193kPa and the tires are mounted on a test vehicle, and noise performance and non-uniform wear resistance performance of the respective tires are evaluated. The evaluation method is equal to the evaluation method used in the first example.

**[Table 2]**

| | Comparison Example 1 | Comparison Example 2 | Comparison Example 3 | Example 11 | Example 12 | Example 13 | Example 14 | Example 15 | Example 16 |
|---|---|---|---|---|---|---|---|---|---|
| The Number of Kinds j of Pitch Lengths | 1 | 3 | 5 | 280 | 14 | 70 | 140 | 280 | 280 |
| P₁/Pⱼ | 1 | 1.67 | 1.67 | 1.99 | 1.60 | 1.99 | 1.99 | 1.67 | 1.99 |
| Maximum Value of Pₜ₋₁/Pₜ | 1.000 | 1.333 | 1.167 | 1.004 | 1.046 | 1.014 | 1.007 | 1.002 | 1.004 |
| Maximum Value of P_{L}/P_{S} | 1.00 | 1.33 | 1.17 | 1.31 | 1.24 | 1.32 | 1.32 | 1.25 | 1.70 |
| Noise Performance | 100 | 104 | 105 | 113 | 107 | 111 | 112 | 109 | 113 |
| Non-Uniform Wear Resistance Performance | 100 | 97 | 98 | 100 | 100 | 100 | 100 | 100 | 96 |

The result of the evaluation is shown in Table 2. In the examples 11 to 16, the noise performance is improved compared to not only the comparison example 1 where the equal-pitch arrangement is adopted but also the comparison example 2 where the 3-pitch variable arrangement is adopted and the comparison example 3 where the 5-pitch variable arrangement is adopted. Further, in the examples 11 to 15 where the maximum value of P_{L}/P_{S} is set to a small value, the non-uniform wear resistance performance is also improved compared to the example 16.

Although several embodiments have been described heretofore, these embodiments have been proposed as examples, and are not intended to restrict the scope of the present invention. These novel embodiments can be carried out in other various modes, and various omissions, replacements and changes can be made without departing from the present invention. These embodiments and their modifications fall within the scope of the present invention as set forth in the appended claims.

## Claims

1. A pneumatic tire comprising a tire tread portion (10) comprising:
a plurality of main grooves (12) extending in a tire circumferential direction (CD);
a plurality of transverse grooves (14) extending in a direction which intersects with the main grooves (12);
a plurality of land portion rows (18) formed by arranging a plurality of land portions (16) formed by the main grooves (12) and the transverse grooves (14) in the tire circumferential direction (CD),
**characterized in that**
assuming a tire circumferential length of an element (20) formed of each land portion (16) and the transverse groove (14) disposed adjacently to said each land portion (16) on one side in the tire circumferential direction (CD) as a pitch length (P), the number of pitches which is the number of the elements (20) in each land portion row (18) over the whole circumference of the tire as N, and the number of land portion rows (18) as L,
each land portion row (18) includes the elements (20) having plural kinds of pitch lengths (P), and at least one land portion row (18) includes the elements (20) which differ in pitch length (P) from the elements (20) of other land portion rows (18), and
the number of kinds j of pitch lengths (P) over the whole tire tread portion (10) is set to N/4 or more and N×L or less, and assuming the pitch lengths (P) over the whole tire tread portion (10) in a descending order as P₁, P₂, ..., Pⱼ and t as an integer of 2 to j, a relationship of Pₜ₋₁/Pₜ<1.050 and a relationship of 1.60≤P₁/Pⱼ<2.00 are satisfied.

2. The pneumatic tire according to claim 1, wherein in each land portion row (18), a maximum value of a pitch length ratio (P_{L}/P_{S}) of the elements (20) disposed adjacently to each other in the tire circumferential direction (CD) is less than 1.71, when assuming a pitch length of the element (20A) having a larger pitch length as P_{L} and a pitch length of the element (20B) having a smaller pitch length as Ps.

3. The pneumatic tire according to claim 1 or 2, wherein the number of kind j of pitch lengths (P) over the whole tire tread portion (10) is set to N×L/4 or more and N×L or less.

4. The pneumatic tire according to any one of claims 1 to 3, wherein at least one land portion row (18) out of the plurality of land portion rows (18) differs from the other land portion rows (18) in phase of the elements (20) in the tire circumferential direction (CD).

## Patentansprüche

1. Luftreifen umfassend einen Reifenlaufflächenabschnitt (10) mit
mehreren Hauptrillen (12), die in einer Reifenumfangsrichtung (CD) verlaufen;
mehreren Quernuten (14), die in einer Richtung verlaufen, die sich mit den Hauptrillen (12) schneidet;
mehreren Stegabschnittsreihen (18), die durch Anordnen mehrerer durch die Hauptrillen (12) und die Querrillen (14) gebildeter Stegabschnitte (16) in der Reifenumfangsrichtung (CD) gebildet werden,
**dadurch gekennzeichnet, dass**
unter der Annahme einer Reifenumfangslänge eines Elements (20), das aus jedem Stegabschnitt (16) und der Querrille (14) gebildet ist, die benachbart zu jedem Stegabschnitt (16) auf einer Seite in der Reifenumfangsrichtung (CD) angeordnet ist, als einer Abstandsweite (P), der Anzahl der Abstände, die die Anzahl der Elemente (20) in jeder Stegabschnittsreihe (18) über den gesamten Umfang des Reifens ist, als N, und der Anzahl der Stegabschnittsreihen (18) als L,
jede Stegabschnittsreihe (18) die Elemente (20) mit mehreren Arten von Abstandsweiten (P) enthält, und mindestens eine Stegabschnittsreihe (18) die Elemente (20) enthält, die sich in der Abstandsweite (P) von den Elementen (20) anderer Stegabschnittsreihen (18) unterscheiden, und
die Anzahl der Arten j der Abstandsweiten (P) über den gesamten Reifenlaufflächenabschnitt (10) auf mindestens N/4 und höchstens N×L eingestellt ist, und unter der Annahme, dass die Abstandsweiten (P) über den gesamten Reifenlaufflächenabschnitt (10) in absteigender Reihenfolge als P₁, P₂, ..., Pⱼ und t als eine ganze Zahl von 2 bis j angenommen werden, die Relation Pₜ₋₁/Pₜ<1,050 und die Relation 1,60<P₁/Pⱼ<2,00 erfüllt sind.

2. Luftreifen nach Anspruch 1, wobei in jeder Stegabschnittsreihe (18) ein Maximalwert eines Abstandsweitenverhältnisses (P_{L}/P_{S}) der Elemente (20), die in der Reifenumfangsrichtung (CD) nebeneinander angeordnet sind, kleiner als 1,71 ist, wenn man eine Abstandsweite des Elements (20A) mit einer größeren Abstandsweite als P_{L} und eine Abstandsweite des Elements (20B) mit einer kleineren Abstandsweite als P_{S} annimmt.

3. Luftreifen nach Anspruch 1 oder 2, wobei die Anzahl j der Arten von Abstandsweiten (P) über den gesamten Reifenlaufflächenabschnitt (10) auf mindestens N×L/4 und höchstens N×L eingestellt ist.

4. Luftreifen nach einem der Ansprüche 1 bis 3, wobei sich mindestens eine Stegabschnittsreihe (18) der mehreren Stegabschnittsreihen (18) in der Phase von den anderen Stegabschnittsreihen (18) der Elemente (20) in der Reifenumfangsrichtung (CD) unterscheidet.

## Revendications

1. Pneumatique comprenant une partie bande de roulement de pneu (10) comprenant :
une pluralité de rainures principales (12) s'étendant dans une direction circonférentielle du pneu (CD) ;
une pluralité de rainures transversales (14) s'étendant dans une direction qui coupe les rainures principales (12) ;
une pluralité de rangées de parties terrain (18) formées en agençant une pluralité de parties terrain (16) formées par les rainures principales (12) et les rainures transversales (14) dans la direction circonférentielle du pneu (CD),
**caractérisé en ce que**
en supposant une longueur circonférentielle de pneu d'un élément (20) formé de chaque partie terrain (16) et de la rainure transversale (14) disposée de façon adjacente à ladite chaque partie terrain (16) sur un côté dans la direction circonférentielle du pneu (CD) comme étant une longueur de pas (P), le nombre de pas qui est le nombre des éléments (20) dans chaque rangée de parties terrain (18) sur toute la circonférence du pneu comme étant N, et le nombre de rangées de parties terrain (18) comme étant L,
chaque rangée de parties terrain (18) comprend les éléments (20) ayant plusieurs types de longueurs de pas (P), et au moins une rangée de parties terrain (18) comprend les éléments (20) dont la longueur de pas (P) diffère des éléments (20) des autres rangées de parties terrain (18), et
le nombre de types j de longueurs de pas (P) sur toute la partie bande de roulement de pneu (10) est réglé sur N/4 ou plus et NxL ou moins, et en supposant les longueurs de pas (P) sur toute la partie bande de roulement de pneu (10) dans un ordre décroissant comme étant P₁, P₂, ..., Pⱼ et t comme étant un nombre entier de 2 à j, une relation Pₜ₋₁/Pₜ < 1,050 et une relation de 1,60 ≤ P₁/Pⱼ < 2,00 sont satisfaites.

2. Pneumatique selon la revendication 1, dans lequel dans chaque rangée de parties terrain (18), une valeur maximale d'un rapport de longueur de pas (P_{L}/P_{S}) des éléments (20) disposés de manière adjacente les uns aux autres dans la direction circonférentielle du pneu (CD) est inférieure à 1,71, en supposant une longueur de pas de l'élément (20A) ayant une plus grande longueur de pas comme étant P_{L} et une longueur de pas de l'élément (20B) ayant une plus petite longueur de pas comme étant Ps.

3. Pneumatique selon la revendication 1 ou 2, dans lequel le nombre de types j de longueurs de pas (P) sur toute la partie bande de roulement de pneu (10) est réglé sur NxL/4 ou plus et NxL ou moins.

4. Pneumatique selon l'une quelconque des revendications 1 à 3, dans lequel au moins une rangée de parties terrains (18) sur la pluralité de rangées de parties terrains (18) diffère des autres rangées de parties terrains (18) quant à la phase des éléments (20) dans la direction circonférentielle du pneu (CD).
